# FASCICULE DE BREVET EUROPEEN

(11) **EP 2 492 643 B1**
(45) Date de publication et mention de la délivrance du brevet: **03.10.2018**
(21) Numéro de dépôt: 12151605.8
(22) Date de dépôt: 18.01.2012
(51) Int. Cl.: G01D 3/10, G01D 21/00

(54) **Détecteur et dispositif de configuration du détecteur**
Detektor und Konfigurationsvorrichtung des Detektors
Detector and device for configuration of the detector

(30) Priorité: 22.02.2011 FR 1151413
(43) Date de publication de la demande: 29.08.2012
(73) Titulaire: Schneider Electric Industries SAS, 92500 Rueil-Malmaison (FR)
(72) Inventeur: Bernard, Jacques, 16340 L'Isle d'Espagnac (FR)
(74) Mandataire: Dufresne, Thierry

(56) Documents cités:
- US-A- 4 804 958
- US-A- 5 408 132
- US-A- 5 754 027
- US-A- 6 101 056
- US-A1- 2002 075 162
- US-A1- 2005 203 641
- Allegro Microsystems, Inc: "A1360, A1361, and A1362: Low-Noise Programmable Linear Hall Effect Sensor ICs with Adjustable Bandwidth (50 kHz Maximum) and Analog Output", , 31 décembre 2009 (2009-12-31), XP002678533, Extrait de l'Internet: URL:http://www.allegromicro.com/en/Product s/Current-Sensor-ICs/SIP-Package-Zero-To-T housand-Amp-Sensor-ICs/A1360-1-2.aspx [extrait le 2012-06-25]

## Description

La présente invention se rapporte à un détecteur et à un dispositif de configuration du détecteur. L'invention se rapporte également à un dispositif de détection comportant à la fois le détecteur et son dispositif de configuration.

En règle générale, à cause des imprécisions de ses différents constituants, un détecteur de type photoélectrique, inductif ou autre doit être configuré. Les paramètres à configurer sont par exemple :
- la logique de sortie, c'est-à-dire NO (pour Normally Opened) ou NC (pour Normally Closed),
- le type de portée, c'est-à-dire portée simple ou portée augmentée,
- la compensation en température,
- la linéarisation pour les sorties analogiques,
- le type de sortie, c'est-à-dire PNP ou NPN,
- la tenue en CEM, c'est-à-dire simple ou renforcée...

Habituellement, la configuration d'un détecteur est réalisée lors de l'assemblage du produit et plus particulièrement à un stade auquel ses caractéristiques de détection n'évoluent plus. Cependant, la configuration ne peut plus être réalisée alors que l'assemblage du détecteur est complètement terminé. En effet, comme l'affectation des broches du connecteur d'un détecteur est standardisée ou même normalisée, il est impossible d'ajouter une broche supplémentaire dédiée à la configuration du détecteur. Aujourd'hui les détecteurs doivent donc être configurés alors que tout ou partie de leur carte électronique est encore accessible. La configuration peut être réalisée de manière analogique en agissant sur la valeur d'un composant passif du détecteur, ou de manière numérique en employant une communication série pour transmettre des données.

Le document US 6,101,056 décrit une tête de détection employée dans un détecteur de type magnétorésistif.

Le document US 4,804,958 décrit un circuit de détection de seuil employé dans un émetteur.

Le document US 5,754,027 décrit un pack de batterie comportant un capteur de courant permettant de détecter le courant traversant une cellule de batterie. Le document US20020075162 décrit un capteur selon l'état de la technique.

Le but de l'invention est donc de proposer un détecteur qui peut être configuré alors que son assemblage est déjà terminé, ceci sans l'ajout de broche supplémentaire dédiée à sa configuration.

Ce but est atteint par un détecteur, notamment de type photoélectrique ou inductif, comportant deux bornes d'alimentation, une première borne d'alimentation et une deuxième borne d'alimentation, et une sortie sur laquelle peut être appliqué un courant de sortie correspondant à un état du détecteur. Le détecteur se caractérise en ce qu'il comporte des moyens de configuration d'un paramètre du détecteur, lesdits moyens de configuration comportant des moyens de maintien de la sortie à l'état passant, un module de détection agencé pour détecter une modulation du courant de sortie représentative du paramètre à configurer dans le détecteur et destiné à générer des signaux d'entrée en fonction de ladite modulation du courant de sortie et un module de traitement destiné à traiter lesdits signaux d'entrée pour générer des signaux de commande et de données employés pour appliquer une configuration au détecteur.

Selon une particularité, la configuration du détecteur concerne la logique de sortie, le type de portée du détecteur, la compensation à appliquer en cas de dérive en température, de non linéarité, d'erreur d'offset, d'erreur de gain, le type de sortie du détecteur ou le niveau de tenue CEM.

Selon une particularité, le détecteur comporte un boîtier fermé renfermant une carte électronique dotée du module de détection et du module de traitement.

Selon une autre particularité, le détecteur est à au moins deux fils.

Selon une autre particularité, le module de traitement est agencé pour générer des signaux de réponse appliqués sur la sortie en fonction des signaux de commande et de données reçus.

Selon une autre particularité, le détecteur est configuré pour mettre sa sortie à l'état passant lors de sa première mise sous tension.

L'invention concerne également un dispositif de détection comportant :
- un détecteur, notamment de type photoélectrique ou inductif, muni de deux bornes d'alimentation, une première borne d'alimentation et une deuxième borne d'alimentation, et d'une sortie sur laquelle peut être appliqué un courant de sortie correspondant à un état du détecteur,
- un dispositif de configuration destiné à configurer au moins un paramètre du détecteur,
- le dispositif de configuration comportant une première borne connectée à l'une des deux bornes du détecteur et une deuxième borne connectée à la sortie du détecteur, maintenue à l'état passant, et un dispositif de modulation destiné à moduler ledit courant de sortie du détecteur selon le paramètre à configurer dans le détecteur.

D'autres caractéristiques et avantages vont apparaître dans la description détaillée qui suit en se référant à un mode de réalisation donné à titre d'exemple et représenté par les dessins annexés sur lesquels :
- la figure 1 représente de manière schématique le détecteur de l'invention associé au dispositif de configuration,
- la figure 2 représente un principe de réalisation du détecteur de l'invention.

Le principe de l'invention est de pouvoir configurer un détecteur 1 alors que celui-ci est assemblé et que sa carte électronique n'est plus accessible. Le détecteur 1 comporte ainsi des moyens de configuration qui lui permettent d'être configuré tardivement à sa sortie de l'usine ou par son utilisateur sur son lieu d'implantation sans être démonté.

De manière connue, un détecteur 1 comporte un boîtier doté d'un connecteur comportant une sortie S et deux bornes d'alimentation, une première borne d'alimentation A1 et une deuxième borne d'alimentation A2. Dans un détecteur deux fils, la sortie S peut être confondue avec l'une de ses bornes d'alimentation et dans un détecteur à trois fils, la sortie S est sur une borne distincte. Selon son état, le détecteur 1 autorise ou pas le passage d'un courant de sortie i_{S} sur sa sortie S, appelé également courant de charge. Le boîtier du détecteur renferme une carte électronique permettant de faire fonctionner le détecteur et de mettre en oeuvre l'invention.

Le principe de l'invention est applicable aux capteurs munis des sorties suivantes :
- trois ou quatre fils à sortie Tout ou Rien, type NPN ou PNP à collecteur ouvert, ou à sortie analogique en tension,
- deux fils, DC ou AC-DC, à sortie tout ou rien ou à sortie analogique en tension.

Dans la suite de la description et sur les dessins, l'invention est décrite pour un détecteur à trois fils mais il faut comprendre qu'elle peut s'appliquer à un détecteur à deux fils ou à plus de trois fils ayant une sortie configurée telle que détaillée ci-dessus.

Le principe de l'invention est d'utiliser les bornes déjà présentes sur le détecteur 1 sans ajouter une borne particulière dédiée à la configuration ni de fils sur le câble. Ainsi, la configuration du détecteur peut être réalisée sans aller à l'encontre des standards, des normes ou des usages.

La mise en oeuvre de la configuration nécessite que la sortie S du détecteur soit à l'état passant. Celle-ci peut être à l'état passant naturellement si la sortie S est normalement passante (NC) ou elle peut être mise à l'état passant en présentant une cible devant le détecteur 1. Il est également possible de prévoir une fenêtre de temps déterminée pendant laquelle la sortie S se met à l'état passant, par exemple lors de la première mise sous tension du détecteur 1.

Pour sa configuration, le détecteur 1 est connecté à un dispositif de configuration 2. Le dispositif de configuration 2 est connecté sur chacune des bornes du détecteur. Sur un détecteur à trois fils, le dispositif de configuration comporte ainsi deux bornes 20, 21 connectées aux deux bornes d'alimentation A1, A2 du détecteur 1 et une borne 22 connectée à la borne de sortie S du détecteur.

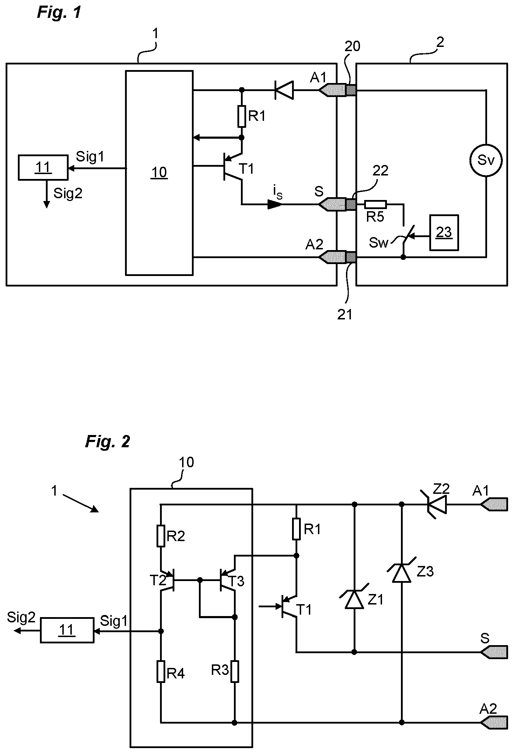

La sortie S du détecteur 1 étant à l'état passant, le dispositif de configuration 2 est destiné à moduler le courant de sortie i_{S} appliqué sur la sortie S du détecteur 1 pour configurer au moins un paramètre du détecteur. Le dispositif de configuration comporte ainsi un dispositif de modulation destiné à moduler le courant de sortie appliqué sur la sortie S du détecteur 1 selon le paramètre à configurer dans le détecteur. Ce dispositif de modulation comporte par exemple une source de tension Sv et un organe de modulation Sw commandé par des moyens de traitement 23 pour moduler le courant de sortie i_{S} selon le paramètre à configurer dans le détecteur 1. Sur la figure 1, l'organe de modulation Sw est représenté par un interrupteur connecté en série avec une résistance R5 entre la sortie S du détecteur 1 et l'une des bornes d'alimentation (A2) du détecteur. La modulation du courant de sortie i_{S} peut par exemple consister à appliquer un courant nul ou un courant minimal sur la sortie S pour définir un état 0 et un courant égal au courant nominal pour définir un état 1.

Selon l'invention, afin d'appliquer la configuration transmise par le dispositif de configuration 2 externe, le détecteur 1 comporte, sur sa carte électronique, un module de détection 10 du courant i_{S} appliqué sur sa sortie S permettant de générer des signaux d'entrée Sig1 selon la modulation appliquée au courant de sortie i_{S} et un module de traitement 11 destiné à interpréter lesdits signaux d'entrée Sig1 pour générer des signaux de commande et/ou de données Sig2 permettant de configurer le paramètre correspondant à la modulation effectuée sur le courant de sortie i_{S}.

En référence à la figure 2, un détecteur 1 comporte par exemple, sur sa carte électronique, entre sa sortie S et l'une de ses bornes d'alimentation A1, A2, une résistance R1 et un premier transistor T1, par exemple de type PNP, commandé pour commuter ou non la sortie du détecteur. La carte électronique comporte également des diodes Zener Z1, Z2, Z3 ne faisant pas l'objet de la présente invention. Connecté en série entre les deux bornes d'alimentation A1, A2, le module de détection 10 du courant de sortie i_{S} comporte pour sa part une résistance R2, un deuxième transistor T2 de type PNP et une résistance R4. Il comporte également un troisième transistor T3 de type PNP dont la base est connectée à la base du deuxième transistor T2, dont le collecteur est connecté au collecteur du premier transistor T1 et dont l'émetteur est connecté à l'une des deux bornes d'alimentation du détecteur via une résistance R3. Les bases des transistors T2 et T3 sont également reliées directement à l'émetteur du transistor T3.

Ainsi, en modulant le courant de sortie i_{S}, le détecteur 1 peut être configuré aisément de l'extérieur grâce à son module de détection 10 et à son module de traitement 11.

Selon l'invention, le module de traitement 11 peut également être agencé pour générer des signaux de réponse en commutant la sortie S. Il peut s'agir par exemple de signaux représentatifs d'un accusé de réception d'une commande ou d'enregistrement d'un paramètre. Ainsi l'opérateur peut communiquer avec le détecteur, lire la configuration du détecteur ou lire des données acquises puis stockées dans la mémoire du détecteur pendant son usage.

Il est bien entendu que l'on peut, sans sortir du cadre de l'invention, imaginer d'autres variantes et perfectionnements de détail et de même envisager l'emploi de moyens équivalents.

## Revendications

1. Détecteur (1), notamment de type photoélectrique ou inductif, comportant deux bornes d'alimentation, une première borne d'alimentation (A1) et une deuxième borne d'alimentation (A2), et une sortie (S) sur laquelle peut être appliqué un courant de sortie (i_{S}) correspondant à l'état du détecteur (1), lequel comporte des moyens de configuration d'un paramètre du détecteur, lesdits moyens de configuration comportant des moyens de maintien de la sortie (S) à l'état passant, un module de détection (10) agencé pour détecter une modulation du courant de sortie (i_{S}) représentative du paramètre à configurer dans le détecteur et destiné à générer des signaux d'entrée (Sig1) en fonction de ladite modulation du courant de sortie (i_{S}) et un module de traitement destiné à traiter lesdits signaux d'entrée pour générer des signaux de commande et de données (Sig2) employés pour appliquer une configuration au détecteur (1).

2. Détecteur selon la revendication 1, **caractérisé en ce que** la configuration du détecteur concerne la logique de sortie, le type de portée du détecteur, la compensation à appliquer en cas de dérive en température, de non linéarité, d'erreur d'offset, d'erreur de gain, le type de sortie du détecteur ou le niveau de tenue CEM.

3. Détecteur selon la revendication 1 ou 2, **caractérisé en ce que** le détecteur comporte un boîtier fermé renfermant une carte électronique dotée du module de détection et du module de traitement.

4. Détecteur selon l'une des revendications 1 à 3, **caractérisé en ce que** le détecteur est à au moins deux fils.

5. Détecteur selon l'une des revendications 1 à 4, **caractérisé en ce que** le module de traitement (11) est agencé pour générer des signaux de réponse appliqués sur la sortie en fonction des signaux de commande et de données reçus (Sig2).

6. Détecteur selon l'une des revendications 1 à 5, **caractérisé en ce qu'**il est configuré pour mettre sa sortie (S) à l'état passant lors de sa première mise sous tension.

7. Dispositif de détection comportant :
- un détecteur (1) tel que défini dans l'une des revendications 1 à 6, notamment de type photoélectrique ou inductif, muni de deux bornes d'alimentation, une première borne d'alimentation (A1) et une deuxième borne d'alimentation (A2), et d'une sortie (S) sur laquelle peut être appliqué un courant de sortie (i_{S}) correspondant à l'état du détecteur,
- un dispositif de configuration destiné à configurer un paramètre du détecteur,
- **caractérisé en ce que** le dispositif de configuration (2) comporte une première borne (20, 21) connectée à l'une des deux bornes du détecteur et une deuxième borne (22) connectée à la sortie (S) du détecteur (1), maintenue à l'état passant, et **en ce qu'**il comporte un dispositif de modulation destiné à moduler ledit courant de sortie (i_{S}) du détecteur selon le paramètre à configurer dans le détecteur.

## Patentansprüche

1. Detektor (1), insbesondere photoelektrischen oder induktiven Typs, umfassend zwei Versorgungsklemmen, eine erste Versorgungsklemme (A1) und eine zweite Versorgungsklemme (A2), und einen Ausgang (S), an den ein Ausgangsstrom (iₛ) entsprechend dem Zustand des Detektors (1) angelegt werden kann, umfassend Mittel zur Konfiguration eines Parameters des Detektors, wobei die Konfigurationsmittel Mittel zum Halten des Ausgangs (S) im durchgeschalteten Zustand, ein Detektionsmodul (10), das dazu vorgesehen ist, eine Modulation des Ausgangsstroms (iₛ) zu erfassen, die für den zu konfigurierenden Detektor repräsentativ und dazu bestimmt ist, Eingangssignale (Sig1) in Abhängigkeit von der Modulation des Ausgangsstroms (iₛ) zu erzeugen, und ein Verarbeitungsmodul umfassen, das dazu vorgesehen ist, die Eingangssignale zu verarbeiten, um Steuer- und Datensignale (Sig2) zu erzeugen, die verwendet werden, um eine Konfiguration an dem Detektor (1) anzuwenden.

2. Detektor nach Anspruch 1, **dadurch gekennzeichnet, dass** die Konfiguration des Detektors die Ausgangslogik, den Bereich des Detektors, den im Falle einer Temperaturabweichung, einer Nichtlinearität, eines Offset-Fehlers, eines Verstärkungsfehlers anzuwendenden Ausgleich, den Ausgangstyp des Detektors oder das EMV-Niveau betrifft.

3. Detektor nach Anspruch 1 oder 2, **dadurch gekennzeichnet, dass** der Detektor ein geschlossenes Gehäuse umfasst, das eine Elektronikkarte einschließt, die mit einem Detektionsmodul und einem Verarbeitungsmodul versehen ist.

4. Detektor nach einem der Ansprüche 1 bis 3, **dadurch gekennzeichnet, dass** der Detektor zumindest mit zwei Drähten ausgeführt ist.

5. Detektor nach einem der Ansprüche 1 bis 4, **dadurch gekennzeichnet, dass** das Verarbeitungsmodul (11) dazu vorgesehen ist, Antwortsignale zu erzeugen, die am Ausgang in Abhängigkeit von den empfangenen Steuer- und Datensignalen (Sig2) angewandt werden.

6. Detektor nach einem der Ansprüche 1 bis 5, **dadurch gekennzeichnet, dass** er eingerichtet ist, um seinen Ausgang (S) bei seiner ersten Inbetriebnahme in den durchgeschalteten Zustand setzen.

7. Detektionsvorrichtung, umfassend:
- einen Detektor (1), wie in einem der Ansprüche 1 bis 6 definiert, insbesondere photoelektrischen oder induktiven Typs, der mit zwei Versorgungsklemmen, einer ersten Versorgungsklemme (A1) und einer zweiten Versorgungsklemme (A2), und einem Ausgang (S) versehen ist, an den ein Ausgangsstrom (iₛ) entsprechend dem Zustand des Detektors angelegt werden kann,
- eine Konfigurationsvorrichtung, die dazu bestimmt ist, einen Parameter des Detektors zu konfigurieren,
- **dadurch gekennzeichnet, dass** die Konfigurationsvorrichtung (2) eine erste Klemme (20, 21), die an eine der zwei Klemmen des Detektors angeschlossen ist, und eine zweite Klemme (22) umfasst, die an den Ausgang (S) des Detektors (1), der im durchgeschalteten Zustand gehalten wird, angeschlossen ist, und dass sie eine Modulationsvorrichtung umfasst, die dazu bestimmt ist, den Ausgangsstrom (iₛ) des Detektors nach dem im Detektor zu konfigurierenden Parameter zu modulieren.

## Claims

1. Detector (1), notably of the photoelectric or inductive type, comprising two power supply terminals, a first power supply terminal (A1) and a second power supply terminal (A2), and an output (S) to which an output current (i_{S}) may be applied corresponding to the state of the detector (1), which comprises means for configuration of a parameter of the detector, said configuration means comprising means for holding the output (S) in the conducting state, a detection module (10) configured for detecting a modulation of the output current (i_{S}) representative of the parameter to be configured in the detector and designed to generate input signals (Sig1) as a function of said modulation of the output current (i_{S}) and a processing module designed to process said input signals in order to generate control and data signals (Sig2) employed for applying a configuration to the detector (1).

2. Detector according to Claim 1, **characterized in that** the configuration of the detector relates to the output logic, the type of range of the detector, the compensation to be applied in the case of temperature drift, of non-linearity, of offset error, of gain error, the type of output from the detector or the level of EMC stability.

3. Detector according to Claim 1 or 2, **characterized in that** the detector comprises a closed housing enclosing an electronic board carrying the detection module and the processing module.

4. Detector according to one of Claims 1 to 3, **characterized in that** the detector has at least two wires.

5. Detector according to one of Claims 1 to 4, **characterized in that** the processing module (11) is configured for generating response signals applied to the output as a function of the control and data signals received (Sig2).

6. Detector according to one of Claims 1 to 5, **characterized in that** it is configured for setting its output (S) in the conducting state when it is first switched on.

7. Detection device comprising:
- a detector (1), notably of the photoelectric or inductive type, having two power supply terminals, a first power supply terminal (A1) and a second power supply terminal (A2), and an output (S) to which an output current (i_{S}) may be applied corresponding to the state of the detector,
- a configuration device designed to configure a parameter of the detector,
- **characterized in that** the configuration device (2) comprises a first terminal (20, 21) connected to one of the two terminals of the detector and a second terminal (22) connected to the output (S) of the detector (1), held in the conducting state, and **in that** it comprises a modulation device designed to modulate said output current (i_{S}) of the detector depending on the parameter to be configured in the detector.
